# EUROPÄISCHE PATENTANMELDUNG

(11) **EP 4 730 612 A1**
(43) Veröffentlichungstag der Anmeldung: **22.04.2026**
(21) Anmeldenummer: 25206217.9
(22) Anmeldetag: 02.10.2025
(51) Int. Cl.: H02K 1/14, H02K 1/18, H02K 15/022, H02K 15/40

(54) **STATORVORRICHTUNG, ELEKTROMOTOR, ANTRIEBSSYSTEM, ZWEIRADFAHRZEUG UND MONTAGEVERFAHREN EINES DERARTIGEN ELEKTROMOTORS**

(30) Priorität: 15.10.2024 DE 102024209974
(71) Anmelder: Robert Bosch GmbH, 70442 Stuttgart (DE)
(72) Erfinder: Doczy, Pal, 1031 Budapest (HU); Ketterer, Wolfram, 72770 Ohmenhausen (DE); Budai, David, H4066 Tiszacsege (HU); Reutlinger, Kurt, 70174 Stuttgart (DE); Nerer, Kristof, 2192 Hevizgyork (HU)

(57) **Zusammenfassung**

Die vorliegende Erfindung betrifft eine Statorvorrichtung (10) für einen Elektromotor (110) für ein Zweiradfahrzeug (100), die Statorvorrichtung (10) aufweisend eine Vielzahl an Statorsegmenten (20), wobei die Vielzahl an Statorsegmenten (20) jeweils eine Jochvorrichtung (30), einen Zahnschaft (24) und einen Zahnkopf (26) aufweisen, wobei die Vielzahl an Statorsegmenten (20) in einer Umfangsrichtung (U) der Statorvorrichtung (10) zueinander kontaktierend angeordnet sind, wobei zumindest ein Statorsegment (20) der Vielzahl an Statorsegmenten (20) eine Kerbvorrichtung (28) für eine Komprimierung der Jochvorrichtung (30) des jeweiligen zumindest einen Statorsegments (20) in der Umfangsrichtung (U) aufweist, wobei die Jochvorrichtung (30) des zumindest einen Statorsegments (20) zumindest abschnittsweise komplementäre Kontaktflächen (32) zur beweglichen Kontaktierung der jeweils benachbarten Statorsegmente (20) während der Komprimierung aufweist. Ferner betrifft die Erfindung einen Elektromotor (110) für ein Zweiradfahrzeug (100), ein Antriebssystem (130) für ein Zweiradfahrzeug (100), ein Zweiradfahrzeug (100) und ein Verfahren zur Montage eines Elektromotors (110).

## Beschreibung

Die vorliegende Erfindung betrifft eine Statorvorrichtung für einen Elektromotor für ein Zweiradfahrzeug. Ferner betrifft die Erfindung einen Elektromotor für ein Zweiradfahrzeug, ein Antriebssystem für ein Zweiradfahrzeug, ein Zweiradfahrzeug und ein Verfahren zur Montage eines Elektromotors.

### Stand der Technik

Die magnetisch aktiven Teile einer elektrischen Maschine bestehen in der Regel aus einem Rotor, der sich dreht und einem Stator, der in einem Gehäuse befestigt ist. Als Befestigungstechnik des Stators in dem Gehäuse sind zahlreiche Befestigungsvorrichtungen und Befestigungsverfahren wie Einkleben, Klemmen, Einpressen und/oder Einschrumpfen bekannt.

Im bekannten Stand der Technik EP 2 084 806 B1 wird beispielsweise die Statorbaugruppe mittels Fixierstiften im Motorgehäuse fixiert. Die Statorbaugruppe weist eine Einkerbung auf, die elastisch federnd zusammengedrückt wird, um einen Ausgleich der Aufweitung der Statorbaugruppe zu ermöglichen.

Im bekannten Stand der Technik DE 10 2008 001 538 A1 wird eine elektrische Maschine beschrieben, wobei deren Statorvorrichtung zumindest einen sich in deren Axialrichtung erstreckenden Schlitz aufweist, der sich von der Anlagefläche ausgehend zumindest mit einer Radialrichtungskomponente in Richtung der dieser radial gegenüberliegenden Umfangsfläche erstreckt. Die Statorvorrichtung wird zur Montage in einem Gehäuse der elektrischen Maschine im Umfang gepresst, wobei die Statorvorrichtung unter einer Verformung des Schlitzes elastisch in dem Gehäuse verspannt wird.

### Offenbarung der Erfindung

Die Erfindung beansprucht eine Statorvorrichtung für einen Elektromotor für ein Zweiradfahrzeug mit den Merkmalen des unabhängigen Anspruchs 1. Ferner offenbart die Erfindung einen Elektromotor für ein Zweiradfahrzeug mit den Merkmalen des unabhängigen Anspruchs 11, ein Antriebssystem für ein Zweiradfahrzeug mit den Merkmalen des unabhängigen Anspruchs 12, ein Zweiradfahrzeug mit den Merkmalen des unabhängigen Anspruchs 13 und ein Verfahren zur Montage eines Elektromotors mit den Merkmalen des unabhängigen Anspruchs 14. Weitere Vorteile und Details der Erfindung ergeben sich aus den Unteransprüchen, der Beschreibung und den Zeichnungen. Dabei gelten Merkmale, die im Zusammenhang mit der erfindungsgemäßen Statorvorrichtung beschrieben sind, selbstverständlich auch im Zusammenhang mit dem erfindungsgemäßen Elektromotor, dem erfindungsgemäßen Antriebssystem, dem erfindungsgemäßen Zweiradfahrzeug, dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung offenbart die Erfindung eine Statorvorrichtung für einen Elektromotor für ein Zweiradfahrzeug. Die Statorvorrichtung weist eine Vielzahl an Statorsegmenten auf, wobei die Vielzahl an Statorsegmenten jeweils eine Jochvorrichtung, einen Zahnschaft und einen Zahnkopf aufweisen, wobei die Vielzahl an Statorsegmenten in einer Umfangsrichtung der Statorvorrichtung zueinander kontaktierend angeordnet sind. Zumindest ein Statorsegment der Vielzahl an Statorsegmenten weist eine Kerbvorrichtung für eine Komprimierung der Jochvorrichtung des jeweiligen zumindest einen Statorsegments in der Umfangsrichtung auf, wobei die Jochvorrichtung des zumindest einen Statorsegments zumindest abschnittsweise komplementäre Kontaktflächen zur beweglichen Kontaktierung der jeweils benachbarten Statorsegmente während der Komprimierung aufweist.

Die erfindungsgemäße Statorvorrichtung ist aus einer Vielzahl an Statorsegmenten ausgestaltet. Die Vielzahl an Statorsegmenten ist beispielsweise als zumindest 18 oder zumindest 24 Statorsegmente zu verstehen. Die Statorsegmente sind bevorzugt kreisförmig oder im Wesentlichen kreisförmig zueinander angeordnet. Die Formulierung "X oder im Wesentlichen X" soll im Rahmen der Erfindung als mögliche, geringe Abweichung, beispielsweise aufgrund von Fertigungstoleranzen, Material- und/oder Prozesseigenschaften verstanden werden, ohne die zugrundeliegende, beabsichtigte Funktion des Merkmals zu verändern. Mit anderen Worten sind die Vielzahl an Statorsegmenten bevorzugt in einem Statorkreis zueinander angeordnet, um die Statorvorrichtung auszugestalten.

Die Vielzahl an Statorsegmenten sind bevorzugt separat voneinander ausgestaltet. Bevorzugt sind die Vielzahl an Statorsegmenten nicht miteinander verbunden oder zumindest nicht stoffschlüssig und/oder nicht kraftschlüssig miteinander verbunden. Die Vielzahl der Statorsegmente sind bevorzugt zueinander beweglich ausgestaltet.

Jede der Vielzahl an Statorvorrichtungen weist eine Jochvorrichtung, einen Zahnschaft und einen Zahnkopf auf. Die Jochvorrichtungen gestalten bevorzugt den Umfang der Statorvorrichtung aus. Die Zahnschäfte erstrecken sich bevorzugt radial von den Jochvorrichtungen zu einem Zentrum der Statorvorrichtung. Die Zahnköpfe sind bevorzugt als stirnseitiger Abschluss der Zahnschäfte in Richtung des Zentrums der Statorvorrichtung zu verstehen. Die Statorköpfe und die Jochvorrichtungen sind bevorzugt an gegenüberliegenden Enden des jeweiligen Zahnschafts ausgestaltet.

Die Vielzahl an Statorsegmenten kontaktieren sich jeweils benachbart über die Jochvorrichtungen, insbesondere ausschließlich über die Jochvorrichtungen. Anschaulich beschrieben kontaktiert ein Statorsegment bevorzugt jeweils zwei benachbarte Statorsegmente. Die Jochvorrichtungen weisen dafür die komplementären Kontaktflächen auf. Die komplementären Kontaktflächen sind als zueinander passende Kontaktflächen zu verstehen. Die Kontaktflächen eines jeweiligen Statorsegments sind bevorzugt an gegenüberliegenden Enden der Jochvorrichtung, insbesondere stirnseitig, ausgestaltet. Beispielhaft sind die komplementären Kontaktflächen von einem Statorsegment und/oder von zwei benachbarten Statorsegmenten als männliche und weibliche Form und/oder als Negativ- und Positivform ausgestaltet. Beispielhaft und bevorzugt sind die komplementären Kontaktflächen als zumindest abschnittsweise abgerundete Kontaktflächen ausgestaltet.

Ein bevorzugter Kern der Erfindung ist es, eine Statorvorrichtung bereitzustellen, die für die Montage in einem Gehäuse vorteilhaft komprimierbar ist.

Zumindest ein Statorsegment der Vielzahl an Statorsegmenten weist eine Kerbvorrichtung für die Komprimierung der Jochvorrichtung des jeweiligen zumindest einen Statorsegments in der Umfangsrichtung auf. Die Kerbvorrichtung ist bevorzugt als ein Schlitz, eine Materialaussparung und/oder ein Spalt in dem zumindest einen Statorsegment zu verstehen. Die Kerbvorrichtung ermöglicht eine Komprimierung der Jochvorrichtung des zumindest einen Statorsegments und damit eine Komprimierung der Statorvorrichtung in der Umfangsrichtung. Die Kerbvorrichtung ermöglicht eine elastische Verformung des zumindest einen Statorsegments und somit eine Komprimierung der Statorvorrichtung in Umfangsrichtung. Die Komprimierung der Kerbvorrichtung erzeugt eine Spannkraft für eine anschließende Durchmesservergrößerung für eine Presspassung der Statorvorrichtung in einem Gehäuse des Elektromotors und/oder des Zweiradfahrzeugs.

Bei der Komprimierung wird die Kerbvorrichtung und damit der Umfang der Statorvorrichtung elastisch zusammengedrückt. Die komplementären Kontaktflächen sind besonders vorteilhaft ausgestaltet, da sie zur beweglichen Kontaktierung der jeweils benachbarten Statorsegmente während der Komprimierung ausgestaltet sind. Bevorzugt ermöglichen die komplementären Kontaktflächen während der Komprimierung eine Bewegung der Statorsegmente entlang der komplementären Kontaktflächen. Besonders bevorzugt ermöglichen die komplementären Kontaktflächen während der Komprimierung eine Gleit-, Dreh- und/oder Schwenkbewegung der Statorsegmente über die komplementären Kontaktflächen. Besonders bevorzugt ermöglichen die komplementären Kontaktflächen während der Komprimierung eine flächig, insbesondere vollflächig, kontaktierende Bewegung der Statorsegmente über die komplementären Kontaktflächen. Andersherum formuliert verhindern die komplementären Kontaktflächen während der Komprimierung bevorzugt eine kippende Bewegung, eine Spaltbildung zwischen den Kontaktflächen, ein Öffnen und/oder Distanzieren der Kontaktflächen voneinander. Die derart ausgestalteten Statorsegmente ermöglichen besonders bevorzugt die Vermeidung von Druckkonzentrationen in den Kontaktflächen und/oder ermöglichen eine vorteilhaft gestützte und/oder geführte Bewegung der komplementären Kontaktflächen während einer Komprimierung des zumindest einen Statorsegments.

Bevorzugt weisen die komplementären Kontaktflächen einen Formschluss zueinander auf. Besonders bevorzugt sind die komplementären Kontaktflächen derart ausgestaltet, dass die komplementären Kontaktflächen einen Formschluss während der Komprimierung und/oder während der Bewegung durch die Komprimierung, insbesondere während der gesamten Bewegung, zueinander aufweisen.

Bevorzugt weisen im Rahmen der Erfindung mehrere Statorsegmente eine Kerbvorrichtung auf. Beispielhaft weisen zumindest eine gerade Anzahl, beispielsweise vier Statorsegmente eine Kerbvorrichtung auf, um eine vorteilhafte Komprimierung der Statorvorrichtung zu ermöglichen. Bevorzugt weist jedes zweite oder sogar jedes Statorsegment eine Kerbvorrichtung auf, um eine besonders vorteilhafte Elastizität der Statorvorrichtung zu ermöglichen.

Bevorzugt weist zumindest jedes Statorsegment mit einer Kerbvorrichtung die zumindest abschnittsweise komplementären Kontaktflächen auf, um eine vorteilhafte Beweglichkeit der entsprechenden Statorsegmente während der Komprimierung zu ermöglichen. Bevorzugt weisen ferner ebenfalls benachbarte Statorsegmente zu den Statorsegmenten mit den Kerbvorrichtungen die komplementären Kontaktflächen auf. Besonders bevorzugt weisen alle Statorsegmente die komplementären Kontaktflächen auf.

Anschaulich formuliert ermöglicht die erfindungsgemäße Statorvorrichtung bevorzugt eine günstige, präzise und zuverlässige Verbindung mit guter Wärmeleitfähigkeit gegenüber einem Rotor innerhalb der Statorvorrichtung. Besonders bevorzugt ermöglicht die erfindungsgemäße Ausgestaltung der Statorvorrichtung, dass die Verbindung der Statorvorrichtung zu einem Gehäuse des Elektromotors und/oder des Zweiradfahrzeugs lösbar ist, sodass die Statorvorrichtung leicht demontierbar ist und die enthaltenen Materialien getrennt vom Gehäuse wiederverwertet werden können.

Beispielhaft und anschaulich formuliert ist der Außendurchmesser der Statorvorrichtung größer als ein Innendurchmesser eines Gehäuses ausgestaltet. Die erfindungsgemäße Statorvorrichtung wird für die Montage in dem Gehäuse komprimiert. Die Statorvorrichtung wird beispielsweise von innen an den Statorzähnen mechanisch gehalten und nach radial innen gezogen. Durch den dadurch reduzierten Außendurchmesser der Statorvorrichtung ist es möglich, diesen berührungs-, kraft-, und spanfrei in das Gehäuse zu stecken. Die Statorvorrichtung wird anschließend am Innendurchmesser freigegeben und klemmt sich durch seine eigene Federkraft im Gehäuse fest.

Eine derart ausgestaltete Statorvorrichtung ist besonders vorteilhaft, da durch die zumindest eine Kerbvorrichtung und die zumindest abschnittsweise komplementären Kontaktflächen eine Komprimierung der Statorvorrichtung in der Umfangsrichtung besonders einfach ermöglicht wird.

Gemäß einer bevorzugten Weiterentwicklung der Erfindung kann bei einer Statorvorrichtung vorgesehen sein, dass die Kerbvorrichtung radial oder im Wesentlichen radial zur Umfangsrichtung in dem zumindest einen Statorsegment, insbesondere in und/oder durch die Jochvorrichtung, in und/oder durch den Zahnschaft und/oder bis zum Zahnkopf, ausgestaltet ist.

Die wenigstens eine Kerbvorrichtung ist radial oder im Wesentlichen radial zu einem Umfang der Statorvorrichtung ausgestaltet. Die wenigstens eine Kerbvorrichtung ermöglicht besonders vorteilhaft eine elastische Verformung und/oder Komprimierung der Jochvorrichtung durch eine Erstreckung radial zur Umfangsrichtung in das zumindest eine Statorsegment. Die Kerbvorrichtung weist bevorzugt mit abnehmendem Radius eine abnehmende Umfangserstreckung auf. Die Kerbvorrichtung ermöglicht eine besonders vorteilhafte Komprimierung des entsprechenden Statorsegments durch eine Erstreckung durch die Jochvorrichtung, in oder durch den Zahnschaft oder sogar bis zum und/oder in den Zahnkopf. Anschaulich formuliert ermöglicht eine vom Umfang der Statorvorrichtung ausgehende Kerbvorrichtung eine stärkere Komprimierung, umso tiefer die Kerbvorrichtung in dem Statorsegment ausgestaltet ist. Die Kerbvorrichtung erstreckt sich bevorzugt zumindest 50 %, insbesondere zumindest 75 %, besonders bevorzugt 100 % in und/oder durch den Zahnschaft.

Bevorzugt weist die Kerbvorrichtung einen Kerbwinkel in einem Kerbgrund auf. Der Kerbwinkel entspricht bevorzugt, wenn alle Statorsegmente eine Kerbvorrichtung umfassen, ζ <= 360°/Anzahl der Statorsegmente.

Die Kerbvorrichtung teilt den entsprechenden Zahnschaft bevorzugt in zwei Hälften, insbesondere zwei gleiche Hälften. Die Zahnschafthälften weisen bevorzugt eine Breite von einer halben Minimalbreite des Zahnschafts auf.

Eine derart ausgestaltete Statorvorrichtung ist besonders vorteilhaft, da durch die Ausgestaltung der zumindest einen Kerbvorrichtung und die zumindest abschnittsweise komplementären Kontaktflächen eine Komprimierung der Statorvorrichtung in der Umfangsrichtung besonders einfach ermöglicht wird.

Gemäß einer bevorzugten Weiterentwicklung der Erfindung kann bei einer Statorvorrichtung vorgesehen sein, dass die jeweilige Jochvorrichtung des zumindest einen Statorsegments zwei gegenüberliegende Kontaktflächen aufweist, wobei die Kontaktflächen als Negativform zu den Kontaktflächen der jeweils benachbarten Statorsegmente, insbesondere als konvexe und/oder konkave Kreisbogenflächen, ausgestaltet sind.

Die Kontaktflächen der jeweils benachbarten Statorsegmente sind als zueinander passende, komplementäre Kontaktflächen zu verstehen. Die Kontaktflächen eines jeweiligen Statorsegments sind bevorzugt an gegenüberliegenden Enden der Jochvorrichtung, insbesondere stirnseitig, ausgestaltet. Beispielhaft sind die Kontaktflächen von einem Statorsegment und/oder von zwei benachbarten Statorsegmenten als männliche und weibliche Form und/oder als Negativ- und Positivform ausgestaltet. Beispielhaft und bevorzugt sind die Kontaktflächen als zumindest abschnittsweise abgerundete Kontaktflächen ausgestaltet. Die Kontaktflächen von benachbarten Statorsegmenten sind bevorzugt formschlüssig zueinander ausgestaltet. Zwischen den Jochvorrichtungen von benachbarten Statorsegmenten ist durch die Ausgestaltung der Kontaktflächen somit eine vorteilhafte Bewegung während der Komprimierung ermöglicht. Gegenteilig formuliert erzeugen die Ausgestaltung der Kontaktflächen eben beispielsweise keinen Nutverschluss und/oder eine steife mechanische Verbindung zwischen den Jochvorrichtungen. Die Kontaktflächen sind also bevorzugt nutverschlussfrei ausgestaltet. Eine derart ausgestaltete Statorvorrichtung ist besonders vorteilhaft, da durch die zumindest eine Kerbvorrichtung und die Ausgestaltung der Kontaktflächen eine Komprimierung der Statorvorrichtung in der Umfangsrichtung besonders einfach ermöglicht wird.

Gemäß einer bevorzugten Weiterentwicklung der Erfindung kann bei einer Statorvorrichtung vorgesehen sein, dass zumindest ein Zahnkopf der Vielzahl an Statorsegmenten eine Greifvorrichtung umfasst, wobei die zumindest eine Greifvorrichtung zum Greifen und zum radialen Komprimieren der Statorvorrichtung, insbesondere durch eine radiale Zugkraft, durch eine Werkzeugvorrichtung ausgestaltet ist.

Die Montage der Statorvorrichtung in einem Gehäuse eines Elektromotors und/oder Zweiradfahrzeugs wird durch das Komprimieren der Statorvorrichtung in Umfangsrichtung ermöglicht. Das Komprimieren wird gemäß dieser Ausgestaltung besonders vorteilhaft ermöglicht, indem zumindest ein Zahnkopf der Vielzahl an Statorsegmenten eine Greifvorrichtung umfasst. Bevorzugt weisen mehrere Statorsegmente, insbesondere eine gerade Anzahl an Statorsegmenten, jedes zweite Statorsegment oder alle Statorsegmente, jeweils eine Greifvorrichtung auf. Die zumindest eine Greifvorrichtung ist zum Greifen und zum radialen Komprimieren der Statorvorrichtung, insbesondere durch eine radiale Zugkraft, durch eine Werkzeugvorrichtung ausgestaltet. Die zumindest eine Greifvorrichtung ist bevorzugt als eine Vorrichtung zum Greifen, eine Vorrichtung zum Einleiten einer Greifkraft und/oder als eine mechanische Schnittstelle für die Werkzeugvorrichtung zu verstehen. Die zumindest eine Greifvorrichtung ist bevorzugt stoffschlüssig mit dem Zahnkopf ausgestaltet. Anschaulich formuliert zieht die Werkzeugvorrichtung die Statorsegmente mit den Greifvorrichtungen radial in Richtung eines Zentrums der Statorvorrichtung. Die voranstehend beschriebene zumindest eine Kerbvorrichtung und damit die Statorvorrichtung wird dabei in der Umfangsrichtung komprimiert wodurch eine Montage der Statorvorrichtung in einem Gehäuse eines Elektromotors und/oder Zweiradfahrzeugs vorteilhaft ermöglicht wird. Bei dem Komprimieren wird durch die Ausgestaltung der Jochvorrichtungen und der komplementären Kontaktflächen eine bewegliche Kontaktierung der jeweils benachbarten Statorsegmente während der Komprimierung ermöglicht.

Die wenigstens eine Kerbvorrichtung und die komplementären Kontaktflächen ermöglichen eine vorteilhafte Wechselwirkung während des Komprimierens der Statorvorrichtung. Die Greifvorrichtung ist bevorzugt zentriert zu dem entsprechenden Zahnkopf und/oder dem entsprechenden Zahnschaft ausgestaltet.

Eine derart ausgestaltete Statorvorrichtung ist besonders vorteilhaft, da durch die zumindest eine Kerbvorrichtung, die Kontaktflächen sowie die Ausgestaltung des Zahnkopfs mit einer Greifvorrichtung eine Komprimierung der Statorvorrichtung in der Umfangsrichtung besonders einfach ermöglicht wird.

Gemäß einer bevorzugten Weiterentwicklung der Erfindung kann bei einer Statorvorrichtung vorgesehen sein, dass die zumindest eine Greifvorrichtung zumindest zwei Greifkerben umfasst, wobei die zumindest zwei Greifkerben gegenüberliegend angeordnet, selbstzentrierend ausgestaltet und/oder spiegelsymmetrisch ausgestaltet sind, insbesondere, wobei eine jeweilige Steigung der zumindest zwei Greifkerben entgegen einem Radius der Statorvorrichtung zumindest abschnittsweise zunehmend ausgestaltet ist.

Die zumindest zwei Greifkerben sind bevorzugt als seitliche Vertiefungen in der zumindest einen Greifvorrichtung ausgestaltet. Die zumindest zwei Greifkerben ermöglichen vorteilhaft eine Krafteinleitung von einer Werkzeugvorrichtung in das Statorsegment für eine Komprimierung der Jochvorrichtung des jeweiligen zumindest einen Statorsegments in der Umfangsrichtung. Die zumindest zwei Greifkerben weisen bevorzugt eine Tiefe von >= 0,6 mm auf. Die zumindest zwei Greifkerben sind bevorzugt gegenüberliegend an der zumindest einen Greifvorrichtung angeordnet, um einen vorteilhaften Griff der Greifvorrichtung zu ermöglichen.

Die zumindest zwei Greifkerben sind bevorzugt selbstzentrierend ausgestaltet. Eine selbstzentrierende Ausgestaltung der zumindest zwei Greifkerben ermöglicht ein zuverlässiges, wiederholgenaues Greifen der Greifvorrichtung durch die Werkzeugvorrichtung. Eine selbstzentrierende Ausgestaltung der zumindest zwei Greifkerben wird bevorzugt durch die Geometrie der Greifkerben ermöglicht. Beispielhaft weisen die Greifkerben einen tiefsten Punkt A und einen radial inneren Anfangspunkt B auf. Von dem Punkt A zu dem Punkt B nimmt die Steigung der Greifkerbe bevorzugt immer weiter ab, d. h., ein Winkel δ zwischen einer zentralen Achse des Statorsegments und dem Verlauf der Greifkerbe wird in zumindest drei Schritten oder kontinuierlich größer. Dadurch ist die tangentiale Kraftkomponente auf den Zahnkopf invers zu seiner tangentialen Position. Ist der Zahnkopf bei einem Greifen durch eine Werkzeugvorrichtung zu weit rechts, schiebt er sich nach links und umgekehrt.

Bevorzugt weisen mehrere Statorsegmente Greifkerben auf, die derart ausgestaltet sind. Somit führt diese Form der Greifkerben dazu, dass sich der zur Verfügung stehende Umfang der Statorvorrichtung gleichmäßig auf die entsprechenden Zahnköpfe verteilt. Damit hat für die Montage der Statorvorrichtung jeder Zahnkopf bei der Komprimierung der Statorvorrichtung den gleichen Abstand zu beiden Nachbarzahnköpfen. Somit ermöglicht die Ausgestaltung der Greifkerben eine möglichst exakte und wiederholgenaue Positionierung der Statorsegmente und damit der Statorvorrichtung in einem Gehäuse eines Elektromotors und/oder Zweiradfahrzeugs.

Eine derart ausgestaltete Statorvorrichtung ist besonders vorteilhaft, da durch die zumindest eine Kerbvorrichtung, die Kontaktflächen sowie die Ausgestaltung des Zahnkopfs mit einer Greifvorrichtung eine Komprimierung der Statorvorrichtung in der Umfangsrichtung besonders einfach ermöglicht wird.

Gemäß einer bevorzugten Weiterentwicklung der Erfindung kann bei einer Statorvorrichtung vorgesehen sein, dass eine minimale Breite der zumindest einen Greifvorrichtung in Relation zu einer minimalen Breite des Zahnschafts des jeweiligen Statorsegments einen Faktor von wenigstens 1 bis 2, insbesondere von wenigstens 1,5, aufweist.

Die Breiten sind bevorzugt in Umfangsrichtung und/oder tangential zur Umfangsrichtung der Statorvorrichtung zu verstehen. Die minimale Breite der zumindest einen Greifvorrichtung ist bevorzugt an einem Grund der voranstehend beschriebenen Greifkerben ausgestaltet. Die minimale Breite des Zahnschafts ist bevorzugt an einem Übergang des Zahnschafts zu dem Zahnkopf ausgestaltet. Der Zahnkopf und die Greifvorrichtung sind folglich bevorzugt breiter als der Zahnschaft ausgestaltet. Ein Faktor von wenigstens 1 bis 2, insbesondere von wenigstens 1,5, zwischen der minimalen Breite der zumindest einen Greifvorrichtung in Relation zu einer minimalen Breite des Zahnschafts ermöglicht eine vorteilhafte Leistungsübertragung zwischen der Statorvorrichtung und einem Rotor eines Elektromotors. Eine derart ausgestaltete Statorvorrichtung ist besonders vorteilhaft, da durch die zumindest eine Kerbvorrichtung, die Kontaktflächen sowie die Ausgestaltung des Zahnkopfs und des Zahnschafts eine Komprimierung der Statorvorrichtung in der Umfangsrichtung sowie eine vorteilhafte Leistungsübertragung besonders einfach ermöglicht wird.

Gemäß einer bevorzugten Weiterentwicklung der Erfindung kann bei einer Statorvorrichtung vorgesehen sein, dass zwei benachbarte Statorsegmente der Vielzahl an Statorsegmenten jeweils eine gemeinsame Statornut der Statorvorrichtung zur Aufnahme von Statorwindungen ausgestalten, insbesondere wobei die jeweiligen Zahnschäfte parallel oder im Wesentlichen parallel zueinander angeordnet sind.

Die Statornut wird bevorzugt durch jeweils eine Flanke eines Zahnschafts von zwei benachbarten Statorsegmenten und durch jeweils eine Hälfte der Jochvorrichtung der zwei benachbarten Statorsegmente ausgestaltet. Die zwei Flanken der Zahnschäfte sind im montierten Zustand der Statorvorrichtung bevorzugt parallel oder im Wesentlichen parallel zueinander angeordnet. Eine derart ausgestaltete Statorvorrichtung ermöglicht besonders vorteilhaft einen rechteckigen oder im Wesentlichen rechteckigen Nutquerschnitt, in dem auf einfache Art und Weise ein hoher Füllgrad mit rundem sowie vorgeformtem Kupferdraht erreicht werden kann.

Gemäß einer bevorzugten Weiterentwicklung der Erfindung kann bei einer Statorvorrichtung vorgesehen sein, dass zumindest eine der Statornuten einen rechtwinkligen Nutgrund im Übergang von dem jeweiligen Zahnschaft zu der jeweiligen Jochvorrichtung aufweist und/oder dass zumindest eine der Statornuten einen Übergangswinkel im Übergang von dem jeweiligen Zahnschaft zu dem jeweiligen Zahnkopf von 20 bis 40°, insbesondere von 25 bis 35°, aufweist.

Der Nutgrund ist bevorzugt als radial äußere Begrenzung der Nut durch die Jochvorrichtungen von zwei benachbarte Statorsegmenten zu verstehen. Die Vielzahl an Statorsegmenten weisen bevorzugt einen rechtwinkligen Übergang von dem jeweiligen Zahnschaft zu der jeweiligen Jochvorrichtung auf, sodass ein rechteckiger oder im Wesentlichen rechteckiger Nutquerschnitt entsteht, in dem auf einfache Art und Weise ein hoher Füllgrad mit rundem sowie vorgeformtem Kupferdraht erreicht werden kann.

Der Übergang von einer Jochvorrichtung zu dem entsprechen Zahnkopf begrenzt die Statornut auf einer radial innenliegenden Seite. Der Übergang von einer Flanke der Jochvorrichtung zu dem entsprechen Zahnkopf weist bevorzugt einen Winkel γ von 20 bis 40°, insbesondere von 25 bis 35°, auf und ermöglicht so eine Runddrahtwicklung mit dichtester Packung und/oder verhindert vorteilhaft ein Wegrutschen der Wicklungen.

Gemäß einer bevorzugten Weiterentwicklung der Erfindung kann bei einer Statorvorrichtung vorgesehen sein, dass zumindest ein Statorsegment der Vielzahl an Statorsegmenten eine äußere Führungsvorrichtung zur komprimierenden Führung bei einem Einschieben in ein Statorgehäuse umfasst, insbesondere wobei die äußere Führungsvorrichtung als eine Nut, in einem Außendurchmesser der Statorvorrichtung und/oder auf einer Außenseite der jeweiligen Jochvorrichtung ausgestaltet ist.

Das Statorgehäuse ist ein eigenständiges Gehäuse für die Statorvorrichtung, ein Gehäuse eines Elektromotors und/oder ein Gehäuse eines Antriebssystems für ein Zweiradfahrzeug.

Die zumindest eine äußere Führungsvorrichtung ermöglicht bevorzugt eine Komprimierung der Statorvorrichtung durch eine radiale Krafteinwirkung auf den Umfang der Statorvorrichtung. Alternativ oder zusätzlich zu der Komprimierung mittels einer zusammenziehenden Krafteinwirkung auf die voranstehend beschriebenen Greifvorrichtungen ist durch die zumindest eine äußere Führungsvorrichtung eine zusammendrückende Krafteinwirkung zur Komprimierung der Statorvorrichtung ermöglicht. Bevorzugt weisen mehrere Statorsegmente, insbesondere jedes zweite, oder jedes Statorsegment zumindest eine äußere Führungsvorrichtung auf. Beispielhaft und anschaulich formuliert wird die Statorvorrichtung mittels Hilfsnadeln und/oder Führungsstäben in ein Gehäuse eingeschoben. Die Hilfsnadeln und/oder Führungsstäbe sind um die Statorvorrichtung verteilt in den äußeren Führungsvorrichtungen angeordnet. Die Hilfsnadeln und/oder Führungsstäbe sind zwischen der Statorvorrichtung und dem Gehäuse angeordnet. Die Statorvorrichtung kann derart in das Gehäuse eingepresst werden, ohne Späne zu erzeugen. Die Hilfsnadeln und/oder Führungsstäbe werden anschließend bevorzugt entfernt, und die Statorvorrichtung verpresst sich im Gehäuse.

Eine Komprimierung der Statorvorrichtung von außen ermöglicht bevorzugt eine bauraumsparende Ausgestaltung der Zahnköpfe und somit mehr Bauraum für einen Rotor. Eine derart ausgestaltete Statorvorrichtung ist besonders vorteilhaft, da durch die zumindest eine Kerbvorrichtung, die Kontaktflächen sowie die Ausgestaltung der zumindest einen äußeren Führungsvorrichtung eine Komprimierung der Statorvorrichtung in der Umfangsrichtung besonders einfach ermöglicht wird.

Gemäß einer bevorzugten Weiterentwicklung der Erfindung kann bei einer Statorvorrichtung vorgesehen sein, dass die Zahnköpfe der Vielzahl an Statorsegmenten kontaktierungsfrei, verbindungsfrei und/oder nutschlussfrei ausgestaltet sind. Derart ausgestaltete Statorsegmente ermöglichen bevorzugt eine Kontaktierung der Statorsegmente ausschließlich über die Jochvorrichtungen der Statorsegmente. Eine kontaktierungsfreie, verbindungsfreie und/oder nutschlussfreie Ausgestaltung der Zahnköpfe ermöglicht eine besonders vorteilhafte Beweglichkeit der Statorsegmente für eine Komprimierung der Statorvorrichtung sowie eine vereinfachte Wicklung der Statorvorrichtung. Ferner wird durch die Ausgestaltung der Statorsegmente ein mögliches Greifen der Zahnköpfe, insbesondere der voranstehend beschriebenen Greifvorrichtungen erleichtert oder grundsätzlich ermöglicht.

Gemäß einem zweiten Aspekt der Erfindung offenbart die Erfindung einen Elektromotor für ein Zweiradfahrzeug. Der Elektromotor weist einen Rotor und eine Statorvorrichtung gemäß dem ersten Aspekt auf. Bei dem beschriebenen Elektromotor ergeben sich sämtliche Vorteile, die bereits zu der Statorvorrichtung gemäß dem ersten Aspekt der Erfindung beschrieben worden sind. Das zuvor beschriebene Gehäuse kann als Bestandteil der Statorvorrichtung, des Elektromotors oder des nachstehenden Zweiradfahrzeugs definiert sein. Bevorzugt ist der Elektromotor konfiguriert für den Antrieb eines Zweiradfahrzeugs.

Gemäß einem dritten Aspekt der Erfindung offenbart die Erfindung ein Antriebssystem für ein Zweiradfahrzeug. Das Antriebssystem umfasst einen Elektromotor gemäß dem zweiten Aspekt der Erfindung sowie eine Schnittstellenvorrichtung zur elektrisch leitenden Anbindung einer Speichervorrichtung für elektrische Energie, eine Steuervorrichtung und/oder eine Sensorvorrichtung. Ferner umfasst das Antriebssystem bevorzugt zumindest eine Eingabevorrichtung und/oder zumindest eine Ausgabevorrichtung zur Interaktion mit einem Anwender. Bei dem beschriebenen Antriebssystem ergeben sich sämtliche Vorteile, die bereits zu der Statorvorrichtung gemäß dem ersten Aspekt der Erfindung und/oder zu dem Elektromotor gemäß dem zweiten Aspekt der Erfindung beschrieben worden sind.

Gemäß einem vierten Aspekt der Erfindung offenbart die Erfindung ein Zweiradfahrzeug. Das Zweiradfahrzeug umfasst einen Elektromotor gemäß dem zweiten Aspekt oder ein Antriebssystem gemäß dem dritten Aspekt der Erfindung. Bei dem beschriebenen Zweiradfahrzeug ergeben sich sämtliche Vorteile, die bereits zu der Statorvorrichtung gemäß dem ersten Aspekt der Erfindung, zu dem Elektromotor gemäß dem zweiten Aspekt der Erfindung und/oder zu dem Antriebssystem gemäß dem dritten Aspekt der Erfindung beschrieben worden sind. Das Zweiradfahrzeug wird bevorzugt durch den Elektromotor und/oder das Antriebssystem angetrieben und/oder im Antrieb unterstützt.

Gemäß einem fünften Aspekt der Erfindung offenbart die Erfindung ein Verfahren zur Montage eines Elektromotors, insbesondere einer Statorvorrichtung eines Elektromotors, gemäß dem zweiten Aspekt. Das Verfahren zur Montage eines Elektromotors, insbesondere einer Statorvorrichtung eines Elektromotors, umfasst:
- Komprimieren zumindest eines Statorsegments der Statorvorrichtung des Elektromotors in der Umfangsrichtung, wobei während des Komprimierens die Jochvorrichtung des zumindest einen Statorsegments die jeweils benachbarten Statorsegmente über die zumindest abschnittsweise komplementären Kontaktflächen beweglich kontaktiert,
- Einführen der Statorvorrichtung in ein Statorgehäuse und
- Freigeben der Statorvorrichtung nach Erreichen einer Endposition in dem Statorgehäuse.

Das Komprimieren wird bevorzugt mittels einer zusammenziehenden Krafteinwirkung auf die voranstehend beschriebenen Greifvorrichtungen zumindest eines Statorsegments durch eine Werkzeugvorrichtung ermöglicht. Alternativ oder zusätzlich wird das Komprimieren der Statorvorrichtung durch eine zusammendrückende Krafteinwirkung durch zumindest eine äußere Führungsvorrichtung ermöglicht. Das Freigeben der Statorvorrichtung ist bevorzugt als Aufweitung des Durchmessers der Statorvorrichtung durch die elastische Rückverformung der zumindest einen Kerbvorrichtung zu verstehen. Bevorzugt umfasst das Verfahren, dass die Statorvorrichtung zusätzlich zur Verpressung in dem Gehäuse verklebt oder anderweitig fixiert wird.

Das Statorgehäuse ist als Bestandteil der Statorvorrichtung, des Elektromotors und/oder des Zweiradfahrzeugs definiert.

Anschaulich und beispielhaft beschrieben ermöglicht das erfindungsgemäße Verfahren bevorzugt eine Komprimierung der Statorvorrichtung, insbesondere der Kerbvorrichtungen in der Umfangrichtung der Statorvorrichtung. Eine Werkzeugvorrichtung ist derart ausgebildet, dass die Werkzeugvorrichtung eine radiale Krafteinleitung in die Greifvorrichtungen bewirkt, wodurch die Statorsegmente radial nach innen gezogen werden und einen Außendurchmesser der Statorvorrichtung gegenüber einer unbelasteten Statorvorrichtung verringert. Dadurch wird ein vorteilhaftes Einführen der Statorvorrichtung in ein Statorgehäuse ermöglicht.

Anschließend wird die Werkzeugvorrichtung außer Wirkverbindung mit der Statorvorrichtung gebracht. Dies bewirkt, dass sich der Außendurchmesser der Statorvorrichtung wieder derart vergrößert, dass zwischen dem Außenumfang der Statorvorrichtung und dem Statorgehäuse eine Klemmschlussverbindung ausgebildet wird.

Eine erfindungsgemäße Statorvorrichtung, ein Elektromotor, ein Antriebssystem sowie ein Zweiradfahrzeug werden nachfolgend anhand von Zeichnungen näher erläutert. Es zeigen jeweils schematisch:
- Figur 1: in einer geschnittenen Ansicht eine Statorvorrichtung mit einer Vielzahl an Statorsegmenten,
- Figur 2: in einer perspektivischen Ansicht ein Statorsegment mit einer Jochvorrichtung, einem Zahnschaft und einem Zahnkopf,
- Figur 3: in einer geschnittenen Ansicht einen Zahnkopf eines Statorsegments mit einer Greifvorrichtung und
- Figur 4: in einer perspektivischen Ansicht ein Zweiradfahrzeug mit einem Antriebssystem
- Figur 5a-c: in jeweils vereinfachten Darstellungen zeitlich aufeinander folgende Montageschritte zur Verdeutlichung der Montage eines Stators in dem Statorgehäuse eines Elektromotors.

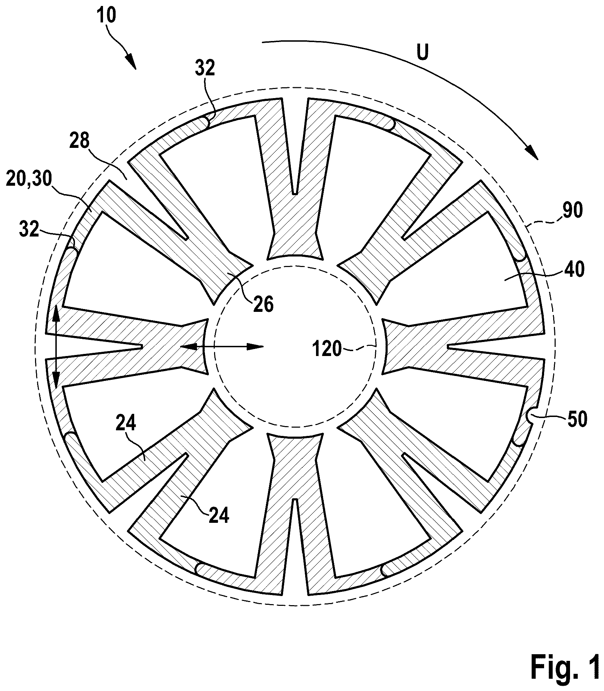

Elemente mit gleicher Funktion und Wirkungsweise sind in den Fig. 1 bis 5 jeweils mit denselben Bezugszeichen versehen.

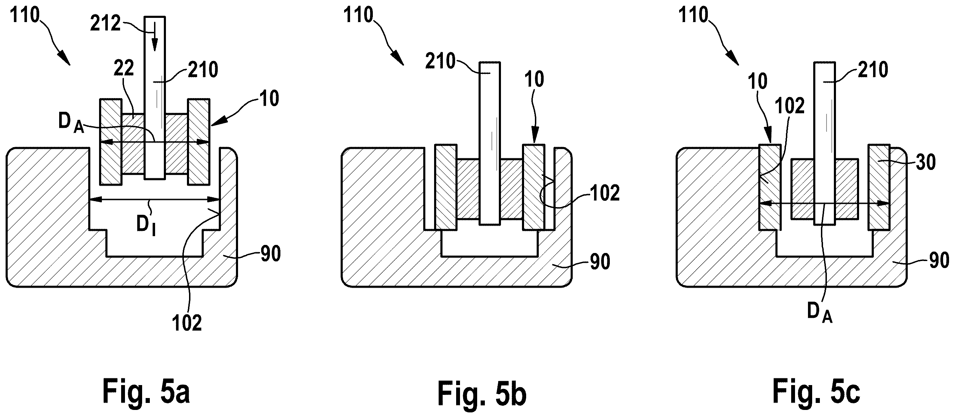

In Fig. 1 ist schematisch in einer geschnittenen Ansicht eine Statorvorrichtung 10 mit einer Vielzahl an Statorsegmenten 20 gezeigt. Die Vielzahl an Statorsegmenten 20, hier acht Statorsegmente 20, weisen jeweils eine Jochvorrichtung 30, einen Zahnschaft 24 und einen Zahnkopf 26 auf. Die Vielzahl an Statorsegmenten 20 sind in einer Umfangsrichtung U der Statorvorrichtung 10 zueinander kontaktierend angeordnet. Alle Statorsegmente 20 der Vielzahl an Statorsegmenten 20 weisen eine Kerbvorrichtung 28 für eine Komprimierung der Jochvorrichtung 30 des jeweiligen Statorsegments 20 in der Umfangsrichtung U auf. Die Jochvorrichtung 30 aller Statorsegmente 20 weisen komplementäre Kontaktflächen 32 zur beweglichen Kontaktierung der jeweils benachbarten Statorsegmente 20 während der Komprimierung auf. Die Kerbvorrichtungen 28 sind radial zur Umfangsrichtung U in den Statorsegmenten 20 ausgestaltet. Die Kerbvorrichtungen 28 erstrecken sich jeweils durch die Jochvorrichtungen 30 in die Zahnschäfte 24. Die Jochvorrichtungen 30 der Statorsegmente 20 weisen jeweils zwei gegenüberliegende Kontaktflächen 32 auf, wobei die Kontaktflächen 32 als Negativform zu den Kontaktflächen 32 der jeweils benachbarten Statorsegmente 20, hier als konvexe und/oder konkave Kreisbogenflächen, ausgestaltet sind. Jeweils zwei benachbarte Statorsegmente 20 der Vielzahl an Statorsegmenten 20 gestalten eine gemeinsame Statornut 40 der Statorvorrichtung 10 zur Aufnahme von Statorwindungen aus. Ein Statorsegment 20 der Vielzahl an Statorsegmenten 20 umfasst eine äußere Führungsvorrichtung 50 zur komprimierenden Führung bei einem Einschieben in ein Statorgehäuse 90, wobei die äußere Führungsvorrichtung 50 als eine Nut, in einem Außendurchmesser der Statorvorrichtung 10 und auf einer Außenseite der jeweiligen Jochvorrichtung 30 ausgestaltet ist. Schematisch ist gestrichelt ein Rotor 120 in der Statorvorrichtung 10 gezeigt. Das radiale Komprimieren der Statorvorrichtung 10 durch eine Werkzeugvorrichtung 210 bei einer Montage der Statorvorrichtung 10 in dem Statorgehäuse 90 ist in Fig. 1 schematisch anhand der Pfeile 11, 12 dargestellt. Die Montage mit Hilfe einer Werkzeugvorrichtung 210 wird anhand der Figuren 5a-5c näher beschrieben.

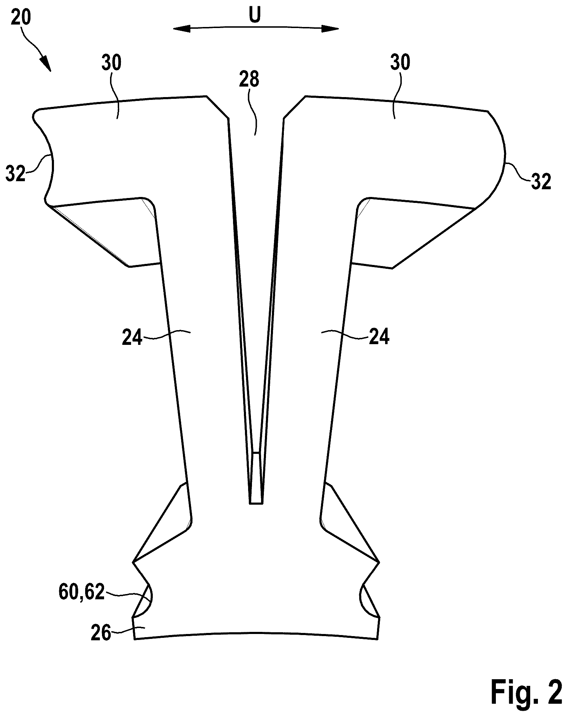

In Fig. 2 ist schematisch in einer perspektivischen Ansicht ein Statorsegment 20 mit einer Jochvorrichtung 30, einem Zahnschaft 24 und einem Zahnkopf 26 gezeigt. Das Statorsegment 20 weist eine Kerbvorrichtung 28 für eine Komprimierung der Jochvorrichtung 30 des Statorsegments 20 in der Umfangsrichtung U auf. Die Jochvorrichtung 30 des Statorsegments 20 weist komplementäre Kontaktflächen 32 zur beweglichen Kontaktierung der jeweils benachbarten Statorsegmente 20 während der Komprimierung auf. Die Kerbvorrichtung 28 ist radial zur Umfangsrichtung U in dem Statorsegment 20 ausgestaltet. Die Kerbvorrichtung 28 erstreckt sich durch die Jochvorrichtungen 30 in den Zahnschaft 24 bis zum Zahnkopf 26. Die Kerbvorrichtung 28 teilt den Zahnschaft 24 in zwei gleiche Hälften. Die Jochvorrichtung 30 des Statorsegments 20 weist zwei gegenüberliegende Kontaktflächen 32 auf, wobei die Kontaktflächen 32 als Negativform zu den Kontaktflächen 32 der jeweils benachbarten Statorsegmente 20, hier als konvexe und/oder konkave Kreisbogenflächen, ausgestaltet sind. Der Zahnkopf 26 umfasst eine Greifvorrichtung 60, wobei die Greifvorrichtung 60 zum Greifen und zum radialen Komprimieren der Statorvorrichtung 10 durch eine Werkzeugvorrichtung ausgestaltet ist. Die Greifvorrichtung 60 umfasst zwei Greifkerben 62, wobei die zwei Greifkerben 62 gegenüberliegend angeordnet, selbstzentrierend und spiegelsymmetrisch ausgestaltet sind.

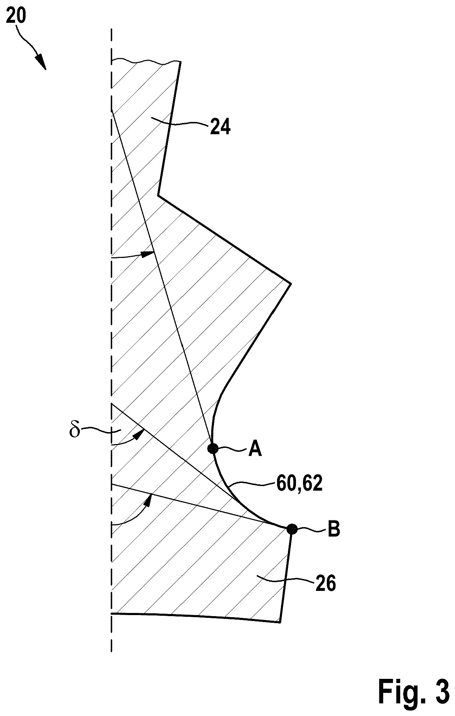

In Fig. 3 ist schematisch in einer geschnittenen Ansicht einen Zahnkopf 26 eines Statorsegments 20 mit einer Greifvorrichtung 60 gezeigt. Der Zahnschaft 24 eines Statorsegments 20 ist abgeschnitten dargestellt. Der Zahnkopf 26 ist nur zur Hälfte gezeigt. Eine Symmetrieachse des Zahnkopfs 26 ist gestrichelt dargestellt. Der Zahnkopf 26 umfasst eine Greifvorrichtung 60, wobei die Greifvorrichtung 60 zum Greifen und zum radialen Komprimieren der Statorvorrichtung 10 durch eine Werkzeugvorrichtung ausgestaltet ist. Die Greifvorrichtung 60 umfasst zwei Greifkerben 62, wobei die zwei Greifkerben 62 gegenüberliegend angeordnet, selbstzentrierend und spiegelsymmetrisch ausgestaltet sind. Eine jeweilige Steigung der zwei Greifkerben 62 ist entgegen einem Radius der Statorvorrichtung 10 abschnittsweise zunehmend ausgestaltet. Die Greifkerben 62 weisen einen tiefsten Punkt A und einen radial inneren Anfangspunkt B auf. Von dem Punkt A zu dem Punkt B nimmt die Steigung der gezeigten Greifkerbe 62 immer weiter ab, d. h., ein Winkel δ zwischen einer zentralen Achse des Statorsegments und dem Verlauf der Greifkerbe wird kontinuierlich größer. Eine minimale Breite der Greifvorrichtung 60 im Punkt A weist in Relation zu einer minimalen Breite des Zahnschafts 24 im Übergang zwischen dem Zahnkopf 26 und dem Zahnschaft 24 einen Faktor von 1,5 auf.

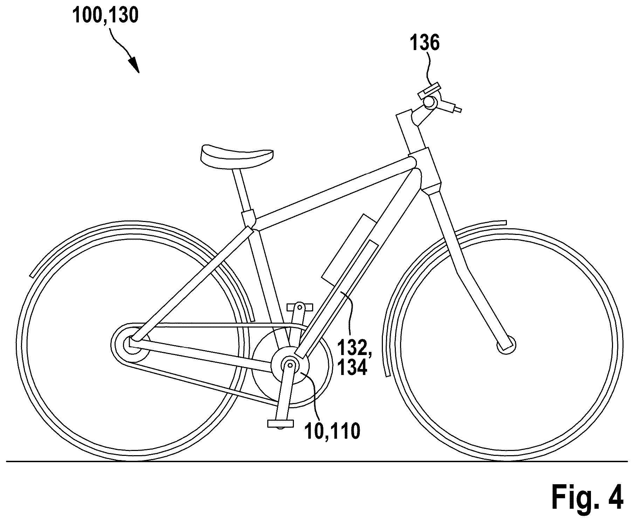

In Fig. 4 ist schematisch in einer perspektivischen Ansicht ein Zweiradfahrzeug 100 mit einem Antriebssystem 130 gezeigt. Das Zweiradfahrzeug 100 umfasst ein Antriebssystem 130 mit einem Elektromotor 110, einer Schnittstellenvorrichtung 132 zur elektrisch leitenden Anbindung einer Speichervorrichtung für elektrische Energie, einer Steuervorrichtung 134 und einer Sensorvorrichtung 136. Der Elektromotor 110 umfasst eine Statorvorrichtung 10.

Die Montage einer soweit beschriebenen Statorvorrichtung 10 in der Statoraufnahme 102 des Statorgehäuses 90 wird nachfolgend anhand der Figurenfolge der Fig. 5a bis 5c wie folgt erläutert.

In einem ersten Schritt gemäß Fig. 5a erfolgt das axiale Einführen der Statorvorrichtung 10 in eine Statoraufnahme 102 des Statorgehäuses 90 mittels einer Werkzeugvorrichtung 210. Dabei ist die mit Drahtwicklungen 22 versehene Statorvorrichtung 10 an ihrem Innenumfang, d.h. im Bereich der Zahnköpfe 26, von einer Werkzeugvorrichtung 210 aufgenommen - insbesondere an der Greifvorrichtung 60. Die Werkzeugvorrichtung 210 ist dazu ausgebildet, dass sie eine Krafteinleitung in die Statorvorrichtung 10 bewirkt, derart, dass sich ein Außendurchmesser D_{A} der Statorvorrichtung 10 gegenüber einer unbelasteten Statorvorrichtung 10 verringert. Dadurch ist es möglich, entsprechend der Darstellung der Fig. 5a die Statorvorrichtung 10 in die Statoraufnahme 102 in Richtung des Pfeils 212 axial einzuführen, obwohl ein Innendurchmesser D_{I} der Statoraufnahme 102 etwas geringer ist als der Außendurchmesser D_{A} der Statorvorrichtung 10 in unbelastetem Zustand, d.h. ohne äußere Krafteinwirkung durch die Werkzeugvorrichtung 210 auf die Statorvorrichtung 10.

Dies bedeutet, dass die Statorvorrichtung 10 für die Montage in dem Gehäuse 90 komprimiert wird. Die Statorvorrichtung 10 wird beispielsweise von innen an den Statorsegmenten 20 mechanisch gehalten und nach radial innen gezogen. Durch den auf diese Weise reduzierten Außendurchmesser D_{A} der Statorvorrichtung 10 ist es möglich, diese berührungs-, kraft-, und spanfrei in das Gehäuse 90 zu stecken. Die Werkzeugvorrichtung 210 dient dabei dem radialen Komprimieren der Statorvorrichtung 10, insbesondere durch eine radiale Zugkraft. Mit anderen Worten ausgedrückt, zieht die Werkzeugvorrichtung 210 die Statorsegmente 20 mit den Greifvorrichtungen 60 radial in Richtung eines Zentrums der Statorvorrichtung 10. Die Kerbvorrichtungen 28 und damit die Statorvorrichtung 10 wird dabei in der Umfangsrichtung U komprimiert, wodurch eine Montage der Statorvorrichtung 10 in dem Gehäuse 90 ermöglicht wird.

In der Fig. 5b ist ein Zustand dargestellt, bei der die Statorvorrichtung 10 in der Statoraufnahme 102 eine axiale Endposition einnimmt. Anschließend wird entsprechend der Darstellung der Fig. 5c die Werkzeugvorrichtung 210 außer Wirkverbindung mit der Statorvorrichtung 10 gebracht. Dies bewirkt, dass sich der Außendurchmesser D_{A} der Statorvorrichtung 10 vergrößert, derart, dass zwischen der Jochvorrichtung 30 der Statorvorrichtung 10 und der Statoraufnahme 102 eine Klemmschlussverbindung ausgebildet ist. Die Statorvorrichtung 10 wird demnach an ihrem Innendurchmesser freigegeben und klemmt sich durch ihre eigene Federkraft im Gehäuse 90 fest.

## Patentansprüche

1. Statorvorrichtung (10) für einen Elektromotor (110) für ein Zweiradfahrzeug (100), die Statorvorrichtung (10) aufweisend eine Vielzahl an Statorsegmenten (20), wobei die Vielzahl an Statorsegmenten (20) jeweils eine Jochvorrichtung (30), einen Zahnschaft (24) und einen Zahnkopf (26) aufweisen, wobei die Vielzahl an Statorsegmenten (20) in einer Umfangsrichtung (U) der Statorvorrichtung (10) zueinander kontaktierend angeordnet sind,
**dadurch gekennzeichnet,**
**dass** zumindest ein Statorsegment (20) der Vielzahl an Statorsegmenten (20) eine Kerbvorrichtung (28) für eine Komprimierung der Jochvorrichtung (30) des jeweiligen zumindest einen Statorsegments (20) in der Umfangsrichtung (U) aufweist, wobei die Jochvorrichtung (30) des zumindest einen Statorsegments (20) zumindest abschnittsweise komplementäre Kontaktflächen (32) zur beweglichen Kontaktierung der jeweils benachbarten Statorsegmente (20) während der Komprimierung aufweist.

2. Statorvorrichtung (10) nach Anspruch 1,
**dadurch gekennzeichnet,**
**dass** die Kerbvorrichtung (28) radial zur Umfangsrichtung (U) in dem zumindest einen Statorsegment (20), insbesondere in und/oder durch die Jochvorrichtung (30), in und/oder durch den Zahnschaft (24) und/oder bis zum Zahnkopf (26), ausgestaltet ist.

3. Statorvorrichtung (10) nach einem der vorangegangenen Ansprüche,
**dadurch gekennzeichnet,**
**dass** die jeweilige Jochvorrichtung (30) des zumindest einen Statorsegments (20) zwei gegenüberliegende Kontaktflächen (32) aufweist, wobei die Kontaktflächen (32) als Negativform zu den Kontaktflächen (32) der jeweils benachbarten Statorsegmente (20), insbesondere als konvexe und/oder konkave Kreisbogenflächen, ausgestaltet sind.

4. Statorvorrichtung (10) nach einem der vorangegangenen Ansprüche,
**dadurch gekennzeichnet,**
**dass** zumindest ein Zahnkopf (26) der Vielzahl an Statorsegmenten (20) eine Greifvorrichtung (60) umfasst, wobei die zumindest eine Greifvorrichtung (60) zum Greifen und zum radialen Komprimieren der Statorvorrichtung (10), insbesondere durch eine radiale Zugkraft, durch eine Werkzeugvorrichtung ausgestaltet ist.

5. Statorvorrichtung (10) nach Anspruch 4,
**dadurch gekennzeichnet,**
**dass** die zumindest eine Greifvorrichtung (60) zumindest zwei Greifkerben (62) umfasst, wobei die zumindest zwei Greifkerben (62) gegenüberliegend angeordnet, selbstzentrierend ausgestaltet und/oder spiegelsymmetrisch ausgestaltet sind, insbesondere, wobei eine jeweilige Steigung der zumindest zwei Greifkerben (62) entgegen einem Radius der Statorvorrichtung (10) zumindest abschnittsweise zunehmend ausgestaltet ist.

6. Statorvorrichtung (10) nach Anspruch 4 oder 5,
**dadurch gekennzeichnet,**
**dass** eine minimale Breite der zumindest einen Greifvorrichtung (60) in Relation zu einer minimalen Breite des Zahnschafts (24) des jeweiligen Statorsegments (20) einen Faktor von wenigstens 1 bis 2, insbesondere von wenigstens 1,5, aufweist.

7. Statorvorrichtung (10) nach einem der vorangegangenen Ansprüche,
**dadurch gekennzeichnet,**
**dass** zwei benachbarte Statorsegmente (20) der Vielzahl an Statorsegmenten (20) jeweils eine gemeinsame Statornut (40) der Statorvorrichtung (10) zur Aufnahme von Statorwindungen ausgestalten, insbesondere wobei die jeweiligen Zahnschäfte (24) parallel zueinander angeordnet sind.

8. Statorvorrichtung (10) nach Anspruch 7,
**dadurch gekennzeichnet,**
**dass** zumindest eine der Statornuten (40) einen rechtwinkligen Nutgrund im Übergang von dem jeweiligen Zahnschaft (24) zu der jeweiligen Jochvorrichtung (30) aufweist und/oder dass zumindest eine der Statornuten (40) einen Übergangswinkel im Übergang von dem jeweiligen Zahnschaft (24) zu dem jeweiligen Zahnkopf (26) von 20 bis 40°, insbesondere von 25 bis 35°, aufweist.

9. Statorvorrichtung (10) nach einem der vorangegangenen Ansprüche,
**dadurch gekennzeichnet,**
**dass** zumindest ein Statorsegment (20) der Vielzahl an Statorsegmenten (20) eine äußere Führungsvorrichtung (50) zur komprimierenden Führung bei einem Einschieben in ein Statorgehäuse (90) umfasst, insbesondere wobei die äußere Führungsvorrichtung (50) als eine Nut, in einem Außendurchmesser der Statorvorrichtung (10) und/oder auf einer Außenseite der jeweiligen Jochvorrichtung (30) ausgestaltet ist.

10. Statorvorrichtung (10) nach einem der vorangegangenen Ansprüche,
**dadurch gekennzeichnet,**
**dass** die Zahnköpfe (26) der Vielzahl an Statorsegmenten (20) kontaktierungsfrei, verbindungsfrei und/oder nutschlussfrei ausgestaltet sind.

11. Elektromotor (110) für ein Zweiradfahrzeug (100), der Elektromotor (110) aufweisend einen Rotor (120) und eine Statorvorrichtung (10) nach einem der vorhergehenden Ansprüche 1 bis 10.

12. Antriebssystem (130) für ein Zweiradfahrzeug (100), das Antriebssystem (130) umfassend einen Elektromotor (110) nach Anspruch 11 sowie eine Schnittstellenvorrichtung (132) zur elektrisch leitenden Anbindung einer Speichervorrichtung für elektrische Energie, eine Steuervorrichtung (134) und/oder eine Sensorvorrichtung (136).

13. Zweiradfahrzeug (100), insbesondere Fahrrad mit Elektroantrieb oder Pedelec, umfassend einen Elektromotor (110) nach Anspruch 11 oder ein Antriebssystem (130) nach Anspruch 12.

14. Verfahren zur Montage eines Elektromotors (110) nach Anspruch 11, das Verfahren umfassend:
- Komprimieren zumindest eines Statorsegments (20) der Statorvorrichtung (10) des Elektromotors in der Umfangsrichtung (U), wobei während des Komprimierens die Jochvorrichtung (30) des zumindest einen Statorsegments (20) die jeweils benachbarten Statorsegmente (20) über die zumindest abschnittsweise komplementären Kontaktflächen (32) beweglich kontaktiert,
- Einführen der Statorvorrichtung (10) in ein Statorgehäuse (90) und
- Freigeben der Statorvorrichtung (10) nach Erreichen einer Endposition in dem Statorgehäuse (90).
